# EUROPÄISCHE PATENTANMELDUNG

(11) **EP 4 369 117 A1**
(43) Veröffentlichungstag der Anmeldung: **15.05.2024**
(21) Anmeldenummer: 22207094.8
(22) Anmeldetag: 14.11.2022
(51) Int. Cl.: G05B 19/042, G05B 9/03

(54) **SICHERHEITSANORDNUNG**

(71) Anmelder: Leuze electronic GmbH + Co. KG, 73277 Owen/Teck (DE)
(72) Erfinder: Hörderich, Johann, 82291 Mammendorf (DE)
(74) Vertreter: Ruckh, Rainer Gerhard

(57) **Zusammenfassung**

Die Erfindung betrifft ein Verfahren zum Betrieb einer Sicherheitsanordnung (20) mit einem Master (23) und einem einen Slave bildenden Sicherheitssensor (1), welche über ein IO-Link Kommunikationsprotokoll Daten austauschen, in dem auf ein Anforderungstelegramm (25) des Masters (23) der Sicherheitssensor (1) ein Ausgangstelegramm (26) an den Master (23) sendet. Der Sicherheitssensor (1) weist eine mehrkanalige Rechnerstruktur auf, in welcher Ausgangstelegramme (26) generiert werden, wobei auf ein Anforderungstelegramm (25) ein vor dessen Erhalt in der mehrkanaligen Rechnerstruktur generiertes und zwischengespeichertes Ausgangstelegramm (26) an den Master (23) gesendet wird.

## Beschreibung

Die Erfindung betrifft eine Sicherheitsanordnung und ein Verfahren zum Betrieb einer Sicherheitsanordnung.

Derartige Sicherheitsanordnungen weisen einen Sicherheitssensor auf, der zur Überwachung von Objekten in einem Überwachungsbereich ausgebildet ist. Für den Einsatz im Bereich der Sicherheitstechnik weist der Sicherheitssensor einen fehlersicheren Aufbau auf. Der Sicherheitssensor bildet generell eine berührungslose Schutzeinrichtung, mit dem insbesondere ein Gefahrenbereich einer Anlage überwacht wird.

Wird mit dem Sicherheitssensor ein gefahrbringender Eingriff im Überwachungsbereich registriert, wird mit diesem Sicherheitssensor eine Sicherheitsfunktion ausgelöst, durch welche die Anlage in einen sicheren Zustand überführt wird. Hierzu ist der Sicherheitssensor mit einer die Anlage steuernden Steuerung über eine Datenverbindung verbunden, so dass zwischen diesen ein Datenaustausch erfolgen kann.

Eine derartige Datenverbindung kann von einem sicheren Feldbus gebildet sein.

Weiterhin kann die Datenverbindung über ein IO-Link Kommunikationsprotokoll erfolgen. IO-Link Systeme bilden kein Bussystem, sondern eine Punkt-zu-Punkt-Verbindung zwischen den jeweiligen Teilnehmern. Die Steuerung bildet allgemein einen Master, der Sicherheitssensor einen Slave der gesamten Sicherheitsanordnung.

Ein Problem bei derartigen Datenverbindungen sind generell niedrige Übertragungsraten, die zu unerwünscht hohen Reaktionszeiten des Gesamtsystems führen.

Bei IO-Link Systemen besteht generell ein Problem in der hohen Anforderung an die Antwortzeit eines Slaves, d.h. des Sicherheitssensors, auf eine Anfrage des Masters. Die Antwortzeit muss dabei kleiner dem zehnfachen Wert einer Bitzeit, d.h. der Übertragungszeit für ein Bit sein.

Um diese Anforderung zu erfüllen, muss eine hinreichend niedrige Übertragungsrate gewählt werden, was die Reaktionszeit des Gesamtsystems erhöht.

Der Erfindung liegt die Aufgabe zugrunde eine Sicherheitsanordnung und ein Verfahren bereitzustellen, das kurze Reaktionszeiten bei einem Datenaustausch zwischen einem Master und einem Sicherheitssensor über ein IO-Link Kommunikationsprotokoll ermöglicht.

Zur Lösung dieser Aufgabe sind die Merkmale der unabhängigen Ansprüche vorgesehen. Vorteilhafte Ausführungsformen und zweckmäßige Weiterbildungen der Erfindung sind in den unabhängigen Ansprüchen beschrieben.

Die Erfindung betrifft ein Verfahren zum Betrieb einer Sicherheitsanordnung mit einem Master und einem einen Slave bildenden Sicherheitssensor, welche über ein IO-Link Kommunikationsprotokoll Daten austauschen, in dem auf ein Anforderungstelegramm des Masters der Sicherheitssensor ein Ausgangstelegramm an den Master sendet. Der Sicherheitssensor weist eine mehrkanalige Rechnerstruktur auf, in welcher Ausgangstelegramme generiert werden, wobei auf ein Anforderungstelegramm ein vor dessen Erhalt in der mehrkanaligen Rechnerstruktur generiertes und zwischengespeichertes Ausgangstelegramm an den Master gesendet wird.

Die Erfindung betrifft weiterhin ein entsprechendes Verfahren.

Bei der erfindungsgemäßen Sicherheitsanordnung kann die Antwortzeit auf eine Telegrammanforderung vom Master gegenüber bekannten mit IO-Link arbeitenden Systemen signifikant verkürzt werden.

Dies wird erfindungsgemäß dadurch erreicht, dass auf ein Anforderungstelegramm des Masters im Sicherheitssensor nicht erst das Anforderungstelegramm geprüft und dann daraufhin ein Ausgangstelegramm generiert und an den Master gesendet wird.

Vielmehr wird bereits im Vorfeld in der mehrkanaligen Rechnerstruktur des Sicherheitssensors ein Ausgangstelegramm vorbereitet, d.h. generiert und zwischengespeichert. Wird dann vom Master ein Anforderungstelegramm an den Sicherheitssensor gesendet, ist das Ausgangstelegramm bereits im Zwischenspeicher verfügbar und kann sofort an den Master gesendet werden, wodurch eine sehr kurze Antwortzeit erhalten wird.

Die Prüfung des Anforderungstelegramms des Masters kann dann nach Aussenden des verbreiteten Ausgangstelegramms in der mehrkanaligen Rechnerstruktur des Sicherheitssensors erfolgen. Daraufhin erfolgt die Generierung eines neuen Ausgangstelegramms.

Gemäß einer ersten Variante wird nach Prüfung des Anforderungstelegramms in der mehrkanaligen Rechnerstruktur ein neues Ausgangstelegramm als Antwort auf das Anforderungstelegramm generiert und zwischengespeichert. Dieses zwischengespeicherte neue Ausgangstelegramm wird nach Empfang des nächsten Anforderungstelegramms an den Master gesendet.

Gemäß einer zweiten Variante wird in der mehrkanaligen Rechnerstruktur des Sicherheitssensors unabhängig vom Empfang eines Anforderungstelegramms ein Ausgangstelegramm vorbereitet und zwischengespeichert. Dieses vorbereitete Ausgangstelegramm wird an den Master gesendet, sobald ein Anforderungstelegramm von dem Master empfangen wird.

In beiden Fällen wird das neue Ausgangstelegramm rechtzeitig vor dem Empfang des nächsten Anforderungstelegramms generiert und zwischengespeichert, so dass auch das neue Ausgangstelegramm sofort nach Empfang des nächsten Anforderungstelegramms an den Master gesendet werden kann.

Zur Erfüllung der Sicherheitsanforderungen für einen Einsatz der Sicherheitsanordnung im Bereich der Sicherheitstechnik erfolgt eine fehlersichere Datenübertragung zwischen dem Master und dem Sicherheitssensor.

Hierzu erfolgt besonders vorteilhaft der Datenaustausch zwischen Master und Sicherheitssensor über ein IO-Link safety Kommunikationsprotokoll.

Dabei werden vorteilhaft mit einem Datentelegramm in Form eines Anforderungstelegramms oder Ausgangstelegramms sicherheitsrelevante Daten übertragen, die durch eine Prüfsumme, insbesondere eine CRC-Signatur abgesichert sind, welche Bestandteil des Datentelegramms ist.

Die Absicherung der sicherheitsrelevanten Daten mit einer Prüfsumme sorgt für eine fehlersichere Übertragung dieser Daten.

Weiterhin können mit dem Datentelegramm nicht sicherheitsrelevante Daten übertragen werden, die nicht durch eine Prüfsumme, insbesondere eine CRC-Signatur abgesichert sind.

Vorbereitete Ausgangstelegramme mit sicherheitsrelevanten Daten ändern sich vorteilhaft im Betriebsmodus des Sicherheitssensors nicht mehr. Dagegen können nicht sicherheitsrelevante Daten noch bis zum Aussenden des Ausgangstelegramms aktualisiert werden.

Vorteilhaft weist das Datentelegramm ein Steuer-Byte mit einem Zählerwert eines Zählers auf.

Zweckmäßig ist der Zähler ein 3-Bit-Zähler.

Dabei wird der Zähler vom Master geführt. Ein in einem Anforderungstelegramm übertragener Zählwert wird im Sicherheitssensor invertiert und an den Master zurückgesendet.

### Weiter vorteilhaft weist jedes Datentelegramm eine eindeutige Portnummer auf

Diese Portnummer wird vom Master vergeben und stellt eine eindeutige Kennzeichnung des Slaves aus Sicht des Masters dar.

Als Teil einer Startup-Prozedur wird die Portnummer zusammen mit anderen Authentifizierungsdaten in einem sogenannten Verify-Record vom Master an den Slave übertragen. Damit ist die Portnummer bereits vor dem Start des sicheren, zyklischen Telegrammverkehrs auf dem Slave bekannt.

Zweckmäßig enthält das Ausgangstelegramm als Antwort auf das erste Anforderungstelegramm einem sicheren Zustand des Sicherheitssensors entsprechende sicherheitsrelevante Daten.

Somit wird vor Erhalt des ersten Anforderungstelegramms ein sicherer Zustand des Sicherheitssensors angenommen, der dann als sicherheitsrelevante Daten mit dem ersten Ausgangstelegramm an den Master gesendet wird. Daher wird vermieden, dass der Master selbst, der insbesondere von einer eine gefahrbringende Anlage steuernden Steuerung gebildet ist, einen unsicheren Zustand des Gesamtsystems herbeiführt.

Gemäß einer vorteilhaften Ausführungsform ist die mehrkanalige Rechnerstruktur des Sicherheitssensors zweikanalig ausgebildet und weist zwei Rechnereinheiten auf.

Gemäß einer weiteren vorteilhaften Ausführungsform sind die beiden vorgenannten Rechnereinheiten als unterschiedliche Cores in einem Multicore Controller innerhalb eines Gehäuses vorhanden.

Dabei werden in den Rechnereinheiten Sensorsignale des Sicherheitssensors zur Generierung eines Objektfeststellungssignals ausgewertet.

Das Objektfeststellungssignal gibt an, ob ein gefahrbringender Objekteingriff in dem vom Sicherheitssensor überwachten Überwachungsbereich vorliegt. Liegt ein solcher Objekteingriff vor, wird ein Objektfeststellungssignal derart generiert, dass eine Sicherheitsfunktion ausgelöst wird, beispielsweise derart, dass die vom Sicherheitssensor überwachte Anlage, deren Steuerung den Master bildet, stillgesetzt wird.

Im einfachsten Fall übernehmen die beiden Rechnereinheiten die Prüfung der vom Master erhaltenen Anforderungstelegramme und die Generierung der Ausgangstelegramme. Vorteilhaft übernimmt eine der Rechnereinheiten die Kommunikation mit dem Master, d.h. nur mit einer ersten Rechnereinheit werden Anforderungstelegramme empfangen und Ausgangstelegramme gesendet.

Da die beiden Rechnereinheiten des Sicherheitssensors auch die Auswertung der Sensorsignale übernehmen, kann deren Rechenkapazität ggf. nicht ausreichen, um die Kommunikation mit dem Master innerhalb der gewünschten Reaktionszeit durchzuführen.

In diesem Fall ist es zweckmäßig, wenn die mehrkanalige Rechnereinheit zusätzlich zu den beiden Rechnereinheiten eine Kommunikations-Rechnereinheit aufweist, wobei nur mit der Kommunikations-Rechnereinheit Anforderungstelegramme empfangen und Ausgangstelegramme gesendet werden.

Die Kommunikations-Rechnereinheit übernimmt ausschließlich die Kommunikation des Sicherheitssensors mit dem Master, wodurch hinreichend kurze Antwortzeiten beim Austausch der Daten gewährleistet sind.

Hierzu ist es vorteilhaft, wenn zu sendende Daten der beiden Rechnereinheiten auf der Kommunikations-Rechnereinheit gespiegelt sind.

In einer weiteren vorteilhaften Ausführungsform ist auch die Kommunikations-Rechnereinheit ein weiterer Core, neben den beiden vorgenannten Cores für die Rechnereinheiten für die Auswertung der Sensorsignale, in einem Multicore Controller innerhalb eines Gehäuses vorhanden.

Gemäß einer vorteilhaften Ausführungsform ist der Sicherheitssensor ein optischer Sensor.

Insbesondere ist der Sicherheitssensor in Lichtvorhang, ein Flächendistanzsensor oder ein Kamerasensor.

Die Erfindung wird im Folgenden anhand der Zeichnungen erläutert. Es zeigen.
- Figur 1:: Ausführungsbeispiel eines Sicherheitssensors in Form eines Lichtvorhangs.
- Figur 2:: Ausführungsbeispiel eines Sicherheitssensors in Form eines Flächendistanzsensors.
- Figur 3:: Ausführungsbeispiel eines Sicherheitssensors in Form eines Kamerasensors.
- Figur 4:: Ausführungsbeispiel der erfindungsgemäßen Sicherheitsanordnung.
- Figur 5:: IO-Link Spezifikation einer maximalen Antwortzeit.
- Figur 6a:: Struktur eines Anforderungstelegramms eines IO-Link Kommunikationsprotokolls.
- Figur 6b:: Struktur eines Ausgangstelegramms eines IO-Link Kommunikationsprotokolls.
- Figur 7:: Erstes Ausführungsbeispiel einer Datenkommunikation zwischen Master und Sicherheitssensor für eine erste Variante des Sicherheitssensors.
- Figur 8:: Zweites Ausführungsbeispiel einer Datenkommunikation zwischen Master und Sicherheitssensor für eine erste Variante des Sicherheitssensors.
a) Versand eines vorbereiteten Ausgangstelegramms.
b) Vorbereitung eines Ausgangstelegramms.
- Figur 9:: Ausführungsbeispiel der erfindungsgemäßen Sicherheitsanordnung mit einer zweiten Variante des Sicherheitssensors.
- Figur 10:: Funktionsdiagramm der Datenkommunikation für die Sicherheitsanordnung gemäß Figur 9.
- Figur 11a-c:: Zeitdiagramme für das Funktionsdiagramm gemäß Figur 10.
- Figur 12:: Erstes Ausführungsbeispiel einer Auswerteeinheit des Sicherheitssensors.
- Figur 13:: Zweites Ausführungsbeispiel einer Auswerteeinheit des Sicherheitssensors.

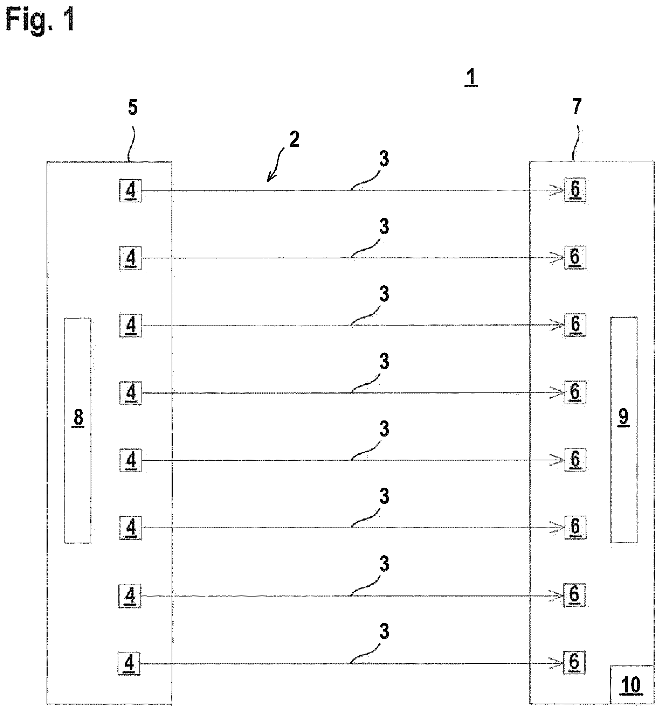

Figur 1 zeigt ein erstes Ausführungsbeispiel eines Sicherheitssensors 1 in Formeines Lichtvorhangs, mittels dessen ein flächiges Schutzfeld 2 überwacht wird.

Der Lichtvorhang umfasst eine Anordnung von Lichtstrahlen 3 emittierenden Sendern 4, die mit einer nicht dargestellten Steuereinheit zyklisch einzeln nacheinander aktiviert werden. Die Sender 4 und die Steuereinheit sind in einer Sendereinheit 5 mit einem ersten Gehäuse integriert. Der Lichtvorhang umfasst weiter eine Anordnung von Empfängern 6 zum Empfangen von Lichtstrahlen 3. Die Empfänger 6 sind in einer Empfängereinheit 7 mit einen zweiten Gehäuse integriert. Die Sender 4 werden von einer Sendersteuerung 8 gesteuert. Den Empfängern 6 ist eine Auswerteeinheit 9 zur Steuerung des Empfängerbetriebs und zur Auswertung der an den Ausgängen der Empfänger 6 anstehenden Empfangssignalen zugeordnet. Zur Erfüllung der Anforderungen für den Einsatz des Lichtvorhangs im Bereich der Sicherheitstechnik weist die Auswerteeinheit 9 einen redundanten Aufbau auf. Hierzu besteht die Auswerteeinheit 9 aus einer mehrkanaligen Rechnerstruktur. Mit dem Lichtvorhang wird ein Schutzfeld 2 überwacht, welches von dem Bereich zwischen den beiden Gehäusen gebildet ist. Dabei ist jedem Sender 4 jeweils ein Empfänger 6 zugeordnet, so dass bei freiem Schutzfeld 2 die vom Sender 4 emittierten Lichtstrahlen 3 auf den Empfänger 6 treffen. Jeweils ein Sender 4 und der zugeordnete Empfänger 6 definieren eine Strahlachse des Lichtvorhangs 1, wobei die Richtung der Strahlachse durch die Lichtstrahlen 3 des jeweiligen Senders 4 gegeben ist. Bei einem Objekteingriff in das Schutzfeld 2 wird der Strahlengang der Lichtstrahlen 3 wenigstens eines Senders 4, d.h. wenigstens eine Strahlachse unterbrochen.

In der Auswerteeinheit 9 wird in Abhängigkeit der Signale der Sensoreinheit als Objektfeststellungssignal ein fehlersicheres Schaltsignal generiert, dessen Schaltzustände angeben, ob sich ein Objekt im Schutzfeld 2 befindet oder nicht. Das Schaltsignal wird über einen Sicherheits-Schaltausgang 10 ausgegeben, der vorteilhaft mehrkanalig ausgebildet ist.

Bei freiem Schutzfeld 2 ist der Sicherheits-Schaltausgang 10 entsprechend dem aktuellen Schaltzustand des Schaltsignals eingeschaltet. Bei einem Objekteingriff in das Schutzfeld 2 ist der Sicherheits-Schaltausgang 10 abgeschaltet.

Alternativ kann der Lichtvorhang als Reflexions-Lichtvorhang ausgebildet sein.

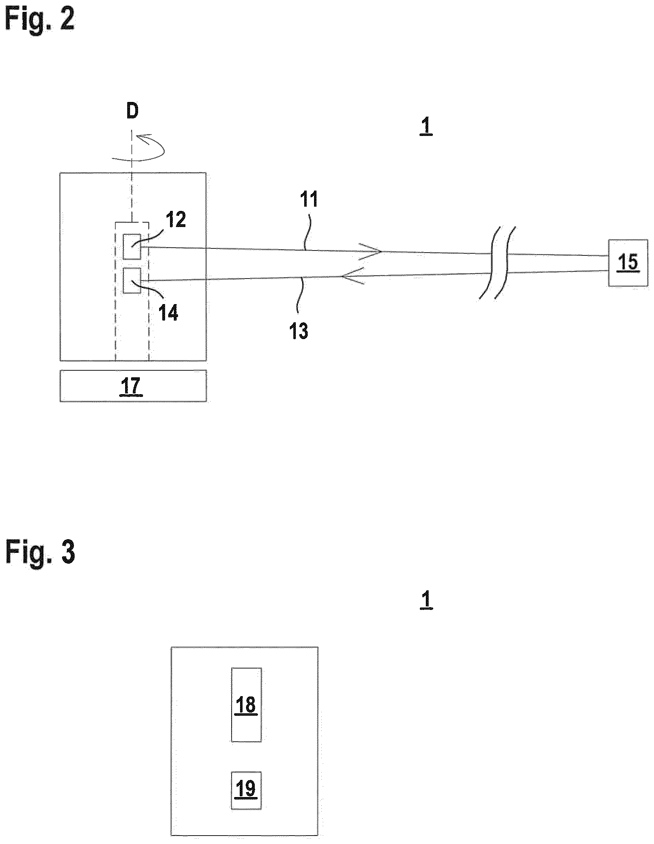

Figur 2 zeigt ein Ausführungsbeispiel eines Sicherheitssensors 1 in Form eines Flächendistanzsensors. Der Flächendistanzsensor weist einen nach einem Impuls-Laufzeit-Verfahren arbeitenden Distanzsensor mit einem Sendelichtstrahlen 11 emittierenden Sendeelement 12 und einem Empfangslichtstrahlen 13 empfangenden Empfangselement 14 auf, wobei aus der Lichtlaufzeit zu einem Zielobjekt 15 und zurück zum Flächendistanzsensor die Distanz des Zielobjekts 15 ermittelt wird.

Das Sendeelement 12 und das Empfangselement 14 sind mittels einer Halterung in einem Messkopf 16 gelagert, dessen Mantelfläche ein Austrittsfenster für die Sendelichtstrahlen 11 und Empfangslichtstrahlen 13 ausbildet. Der Messkopf 16 ist drehbar auf einem Sockel 17 gelagert. Mittels eines nicht dargestellten Antriebs wird der Messkopf 16 in eine Drehbewegung um eine Drehachse D versetzt, wodurch die Sendelichtstrahlen 11 periodisch ein flächiges Schutzfeld 2 überstreichen.

Alternativ kann der Flächendistanzsensor derart ausgebildet sein, dass das Sendeelement 12 und Empfangselement 14 stationär in einem Gehäuse angeordnet sind. Die Sendelichtstrahlen 11 werden dann über eine motorisch getriebene Ablenkeinheit periodisch abgelenkt.

Figur 3 zeigt ein Ausführungsbeispiel eines Sicherheitssensors 1 in Form eines Kamerasensors, der einen Bildsensor 18 und eine Beleuchtungseinheit 19 aufweist. Der Bildsensor 18 kann eine Linear- oder Matrixanordnung von Pixeln aufweisen. Beispielsweise kann der Bildsensor 18 von einem CCD- oder CMOS-Array gebildet sein.

Entsprechend der Ausführungsform gemäß Figur 1 weisen auch die Sicherheitssensoren 1 gemäß den Figuren 2 und 3 eine Auswerteeinheit 9 und einen Sicherheits-Schaltausgang 10 auf.

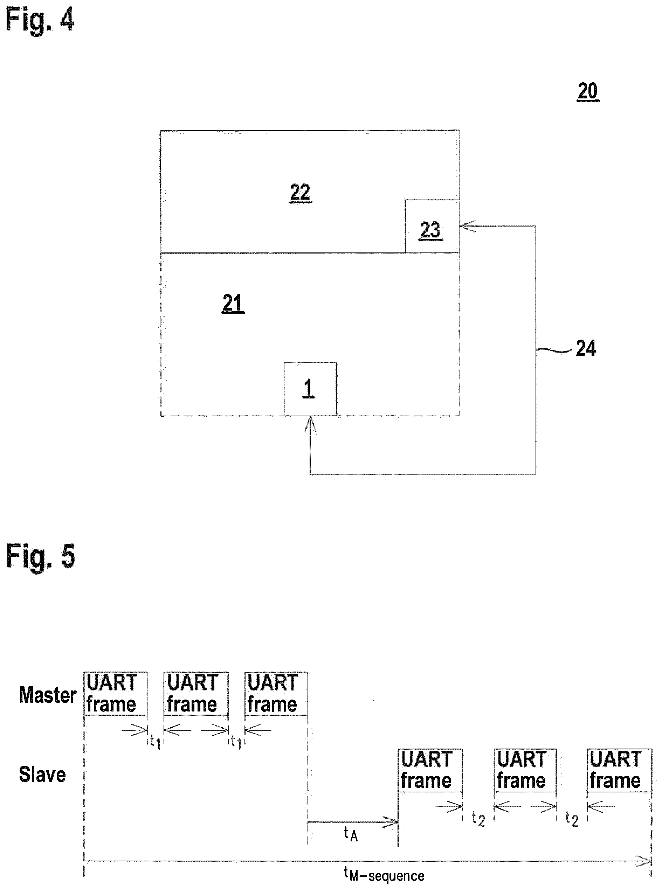

Figur 4 zeigt schematisch ein Ausführungsbeispiel der erfindungsgemäßen Sicherheitsanordnung 20. Die Sicherheitsanordnung 20 umfasst als Sicherheitssensor 1 einen Flächendistanzsensor mit dem ein Gefahrenbereich 21 an einer Anlage 22 überwacht wird. Die Anlage 22 wird von einer Steuerung gesteuert, die einen Master 23 bildet und an welchen der Sicherheitssensor 1 als Slave über eine Datenverbindung 24 angeschlossen ist. Der Sicherheitssensor 1 bildet einen Fail Safe (FS) Sensor, der Master 23 ist ein Fail Safe (FS) Master 23. Erfindungsgemäß werden über die Datenverbindungen 24 Daten über ein IO-Link Kommunikationsprotokoll, vorteilhaft über ein IO-Link Safety Kommunikationsprotokoll ausgetauscht.

Figur 5 zeigt schematisch die IO-Link Spezifikation mit der geforderten maximalen Antwortzeit t_{A} bei der Datenübertragung.

Innerhalb von UART-frames werden jeweils 8 Nutzdatenbits zwischen Master 23 und Slave übertragen, wobei T_{Bit} die Übertragungszeit für 1 Bit ist. Die UARTframes dürfen Master-seitig 23 durch maximale Zeiten t₁ getrennt und Slave-seitig durch maximale Zeiten t₂ getrennt sein. Die Zeit t_{A} einer Übertragungssequenz darf maximal 10 x T_{Bit} betragen.

Diese Anforderung wird bei der erfindungsgemäßen Sicherheitsanordnung 20 erfüllt.

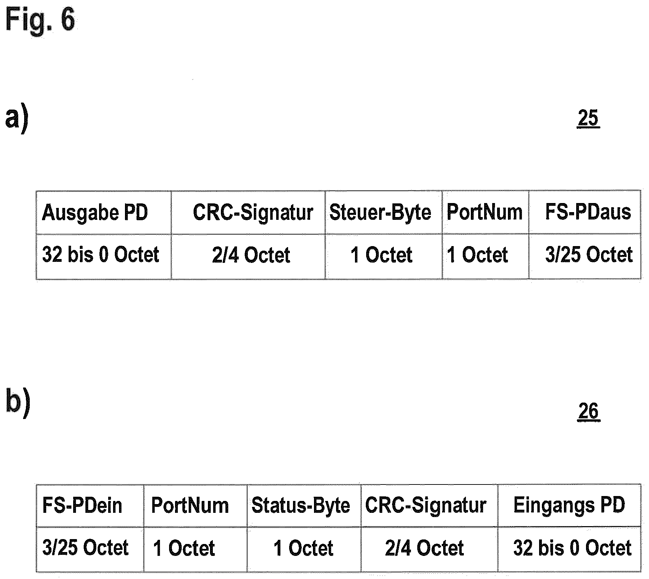

Die Figuren 6a, 6b zeigen die Strukturen der Datentelegramme, die über IO-Link bei der erfindungsgemäßen Sicherheitsanordnung 20 übertragen werden.

Figur 6a zeigt ein vom Master 23 versendetes Anforderungstelegramm 25, mit dem sicherheitsrelevante Daten (FS-PDaus) an den Slave übertragen werden, die mit einer CRC-Signatur abgesichert sind. Zudem enthält das Anforderungstelegramm 25 eine Portnummer (PortNum), die den jeweiligen Slave kennzeichnet und die vom Master 23 vergeben wird. Weiterhin ist ein Steuer-Byte vorhanden, das einen Zählerwert eines 3 Bit-Zählers enthält. Schließlich können mit einem Anforderungstelegramm 25 auch nicht sicherheitsrelevante Daten (Ausgabe PD) übertragen werden.

Figur 6b zeigt ein vom Slave versendetes Antworttelegramm 26. Das Antworttelegramm 26 weist einen zum Anforderungstelegramm 25 entsprechenden Aufbau auf. Auch dort werden über eine CRC-Signatur abgesicherte sicherheitsrelevante Daten (FS PDein) und nicht abgesicherte nicht sicherheitsrelevante Daten (Eingangs PD) versendet. Das dem Steuer-Byte entsprechende Status-Byte enthält einen Wert eines 3 Bit-Zählers.

Vorteilhaft wird der Zähler vom Master 23 geführt. Ein in einem Anforderungstelegramm 25 übertragener Zählwert wird im Sicherheitssensor 1 invertiert und an den Master 23 zurückgesendet.

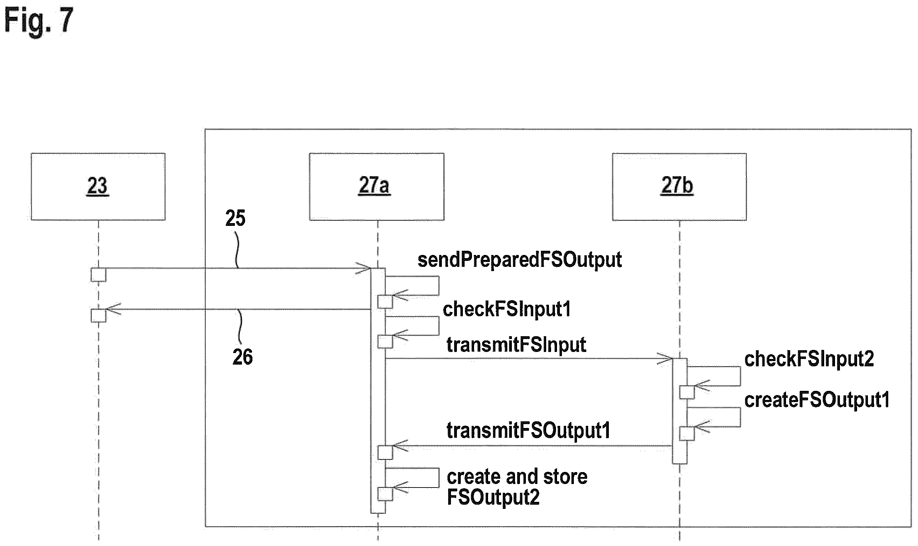

Figur 7 zeigt ein Funktionsdiagramm der Sicherheitsanordnung 20 mit dem Master 23 und einem Sicherheitssensor 1, der als mehrkanalige Rechnerstruktur zwei Rechnereinheiten 27a, 27b aufweist. Die Rechnereinheiten 27a, 27b bilden die Auswerteeinheit 9 des Sicherheitssensors 1 und dienen zur Auswertung der Sensorsignale und zur Generierung des Objektfeststellungssignals. Zudem übernehmen die Rechnereinheiten 27a, 27b die IO-Link Datenkommunikation und -auswertung, wobei nur die erste Rechnereinheit 27a mit dem Master 23 kommuniziert.

Erfindungsgemäß wird sofort nach Empfang eines Anforderungstelegramms 25 vom Master 23 in der ersten Rechnereinheit 27a ein vorbereitetes, d.h. zuvor entsprechend den Sicherheitsanforderungen, zweikanalig erstelltes und zwischengespeichertes Ausgangstelegramm 26 an den Master 23 zurückgesendet (send prepared FSoutput).

Danach wird in der ersten Rechnereinheit 27a das empfangene Anforderungstelegramm 25 geprüft (check FSinput1). Dann wird das Anforderungstelegramm an die zweite Rechnereinheit 27b weitergeleitet (transmit FSinput). Auch in der zweiten Rechnereinheit 27b wird das Anforderungstelegramm geprüft (check FSInput2). Daraufhin wird zweikanalig ein neues Ausgangstelegramm 26 generiert, zuerst in der zweiten Rechnereinheit 27b (create FSOutput1), wobei dann das Ergebnis an die erste Rechnereinheit 27a übermittelt wird (transmit FSOutput1) und darauf in der ersten Rechnereinheit 27a weiterhin das Ausgangstelegramm 26 generiert wird, wobei dann das fertige Ausgangstelegramm 26 zwischengespeichert wird (create and store FSOutput2). Das so vorbereitete Ausgangstelegramm 26 wird an den Master 23 gesendet, sobald ein neues Anforderungstelegramm empfangen wird.

Bei der Ausführungsform der Figur 7 ist die Generierung eines neuen Ausgangstelegramms 26 an die Versendung des ersten Ausgangstelegramms 26 nach Empfang des Anforderungstelegramms 25 gekoppelt.

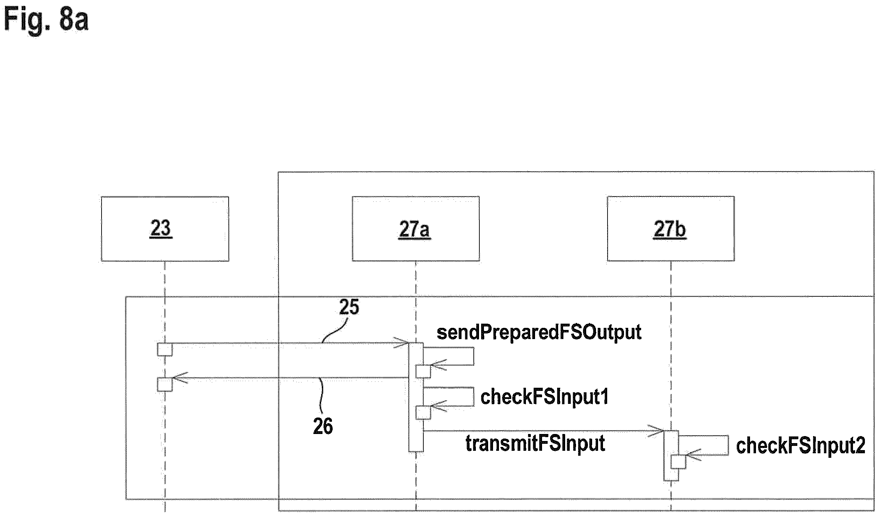

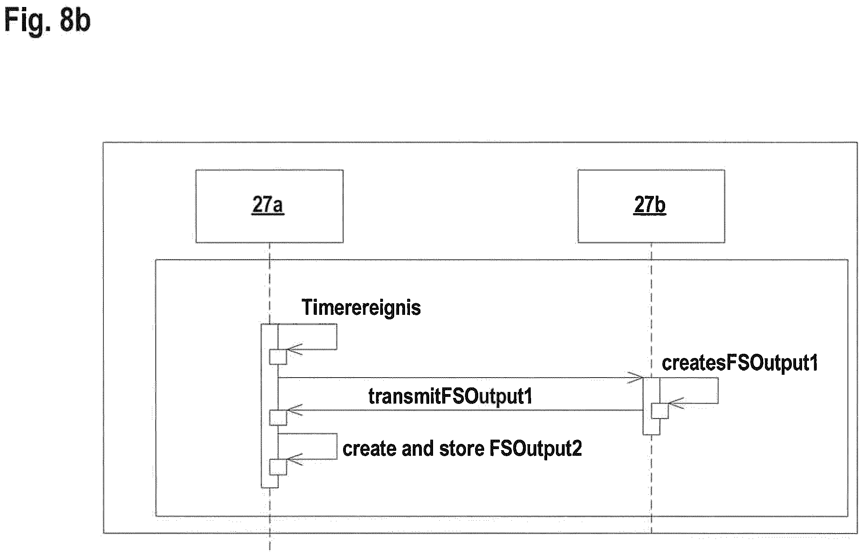

Die Figuren 8a, 8b zeigen eine Variante der Ausführungsform gemäß Figur 7, bei der die Generierung eines neuen Ausgangstelegramms 26 vom Empfang des Anforderungstelegramms 25 und dem darauffolgenden Versenden des ersten Ausgangstelegramms 26 entkoppelt ist.

Figur 8a zeigt den Versand eines vorbereiteten Ausgangstelegramms 26 nach dem Empfang eines Anforderungstelegramms 25 vom Master 23 und anschließender Prüfung des Anforderungstelegramms 25 in beiden Rechnereinheiten 27a, 27b analog zur Ausführungsform gemäß Figur 7.

Figur 8b zeigt die Vorbereitung des nächsten Ausgangstelegramms 26 unabhängig vom Empfang des Anforderungstelegramms 25.

Die Generierung des Ausgangstelegramms 26 wird durch einen Timer (Timerereignis) initiiert. Die weitere Generierung des Ausgangstelegramms 26 erfolgt analog zur Ausführungsform gemäß Figur 7.

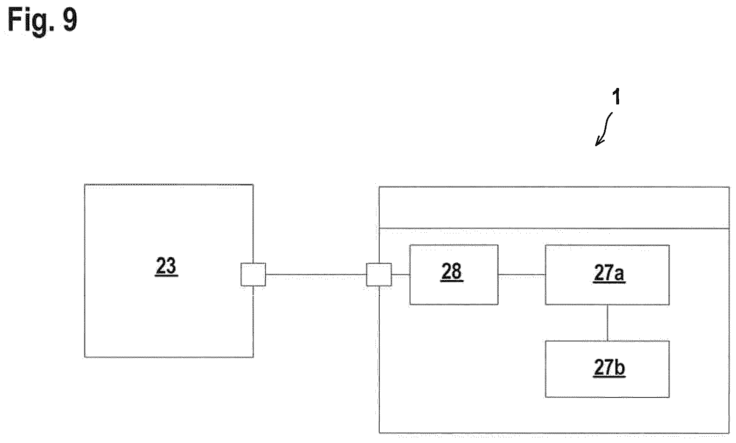

Figur 9 zeigt eine Variante der Ausführungsform gemäß Figur 7. Bei der Ausführungsform gemäß Figur 9 weist die mehrkanalige Rechnerstruktur des Sicherheitssensors 1 zusätzlich zur ersten Rechnereinheit 27a und zur zweiten Rechnereinheit 27b eine Kommunikations-Rechnereinheit 28 auf. Die Kommunikations-Rechnereinheit 28 übernimmt die Kommunikation mit dem Master 23 über IO-Link.

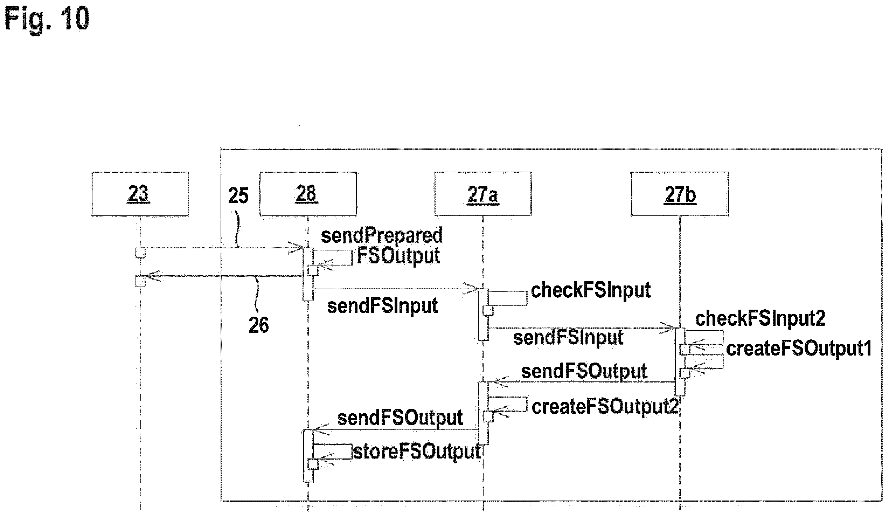

Figur 10 zeigt ein Funktionsdiagramm für die Sicherheitsanordnung 20 gemäß Figur 9. Wie aus Figur 10 ersichtlich übernimmt die Kommunikations-Rechnereinheit 28 das Empfangen der Anforderungstelegramme 25 und das Zwischenspeichern und Aussenden der Ausgangstelegramme 26. Die Rechnereinheiten 27a, 27b übernehmen die Prüfung der Anforderungstelegramme 25. Die einzelnen Verfahrensschritte entsprechen der Ausführungsform gemäß Figur 7.

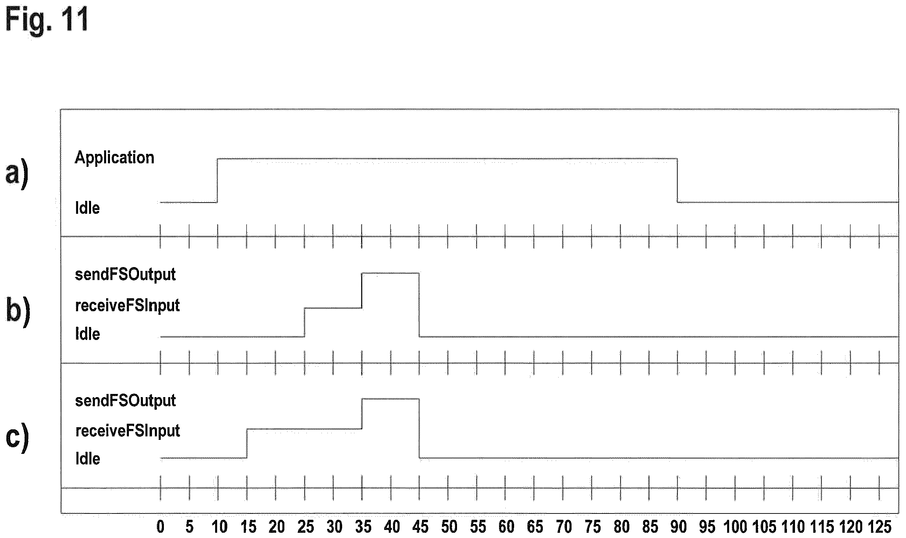

Die Figuren 11a bis 11c zeigen exemplarisch Zeitdiagramme für die Sicherheitsanordnung 20 gemäß Figur 10. Dabei zeigt 11a das Zeitverhalten der Rechnereinheiten 27a, 27b. Figur 11b zeigt das Zeitverhalten der Kommunikations-Rechnereinheit 28. Figur 11c zeigt das IO-Link-Zeitverhalten. Zu erkennen ist hier, dass zwischen receiveFSInput 11c und 11b auch eine Verzögerung auftreten kann. Diese ist allerdings unabhängig von der Sensorapplikation. Deshalb kann mit ComCPU die geforderte Antwortzeit t_{A}<= 10^{∗}t_{Bit} i.d.R. eingehalten werden.

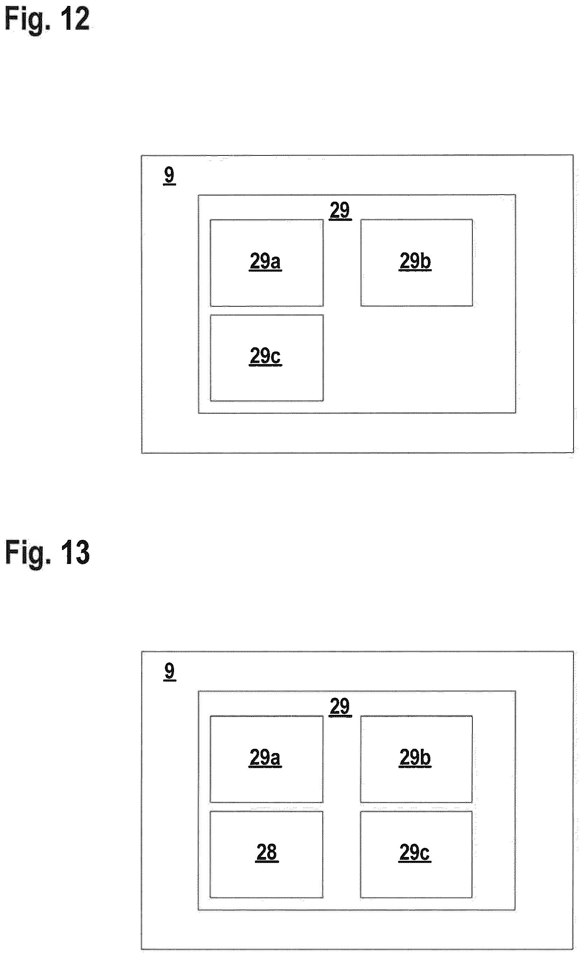

Figur 12 zeigt ein erstes Ausführungsbeispiel der Auswerteeinheit 9 des Sicherheitssensors 1. Die Auswerteeinheit 9 ist als Multi Core CPU 29 ausgebildet, die mehrere Cores 29a-c, d.h. Rechnerkerne aufweist. In Figur 12 sind exemplarisch drei Cores 29a-c dargestellt, wobei natürlich auch eine andere Anzahl von Cores 29a-c möglich ist. Die Multi Core CPU 29 ist in einem Gehäuse angeordnet.

Figur 13 zeigt ein weiteres Ausführungsbeispiel der Auswerteeinheit 9 des Sicherheitssensors 1. Die Ausführungsform der Figur 13 unterscheidet sich von der Ausführungsform der Figur 12 nur dadurch, dass die Multi Core CPU 29 als zusätzliche Core-Einheit die Kommunikations-Rechnereinheit 28 aufweist.

### Bezugszeichenliste

- (1): Sicherheitssensor
- (2): Schutzfeld
- (3): Lichtstrahl
- (4): Sender
- (5): Sendereinheit
- (6): Empfänger
- (7): Empfängereinheit
- (8): Sendersteuerung
- (9): Auswerteeinheit
- (10): Sicherheits-Schaltausgang
- (11): Sendelichtstrahl
- (12): Sendeelement
- (13): Empfangslichtstrahl
- (14): Empfangselement
- (15): Zielobjekt
- (16): Messkopf
- (17): Sockel
- (18): Bildsensor
- (19): Beleuchtungseinheit
- (20): Sicherheitsanordnung
- (21): Gefahrenbereich
- (22): Anlage
- (23): Master
- (24): Datenverbindung
- (25): Anforderungstelegramm
- (26): Ausgangstelegramm
- (27a): Rechnereinheit
- (27b): Rechnereinheit
- (28): Kommunikations-Rechnereinheit
- (29a-c): Core

- (D): Drehachse

## Patentansprüche

1. Sicherheitsanordnung (20) mit einem Master (23) und einem einen Slave bildenden Sicherheitssensor (1), welche über ein IO-Link Kommunikationsprotokoll Daten austauschen, in dem auf ein Anforderungstelegramm (25) des Masters (23) der Sicherheitssensor (1) ein Ausgangstelegramm (26) an den Master (23) sendet, **dadurch gekennzeichnet, dass** der Sicherheitssensor (1) eine mehrkanalige Rechnerstruktur aufweist, in welcher Ausgangstelegramme (26) generiert werden, wobei auf ein Anforderungstelegramm (25) ein vor dessen Erhalt in der mehrkanaligen Rechnerstruktur generiertes und zwischengespeichertes Ausgangstelegramm (26) an den Master (23) gesendet wird.

2. Sicherheitsanordnung (20) nach Anspruch 1, **dadurch gekennzeichnet, dass** der Datenaustausch zwischen Master (23) und Sicherheitssensor (1) über ein IO-Link safety Kommunikationsprotokoll erfolgt.

3. Sicherheitsanordnung (20) nach einem der Ansprüche 1 oder 2, **dadurch gekennzeichnet, dass** mit einem Datentelegramm in Form eines Anforderungstelegramms (25) oder Ausgangstelegramms (26) sicherheitsrelevante Daten übertragen werden, die durch eine durch eine Prüfsumme, insbesondere eine CRC-Signatur, abgesichert sind, welche Bestandteil des Datentelegramms ist.

4. Sicherheitsanordnung (20) nach Anspruch 3, **dadurch gekennzeichnet, dass** mit dem Datentelegramm zusätzlich nicht sicherheitsrelevante Daten übertragen werden, die nicht durch eine Prüfsumme, insbesondere eine CRC-Signatur abgesichert sind.

5. Sicherheitsanordnung (20) nach einem der Ansprüche 3 oder 4, **dadurch gekennzeichnet, dass** das Datentelegramm ein Steuer-Byte mit einem Zählerwert eines Zählers aufweist.

6. Sicherheitsanordnung (20) nach Anspruch 5, **dadurch gekennzeichnet, dass** der Zähler ein 3-Bit-Zähler ist.

7. Sicherheitsanordnung (20) nach einem der Ansprüche 5 oder 6, **dadurch gekennzeichnet, dass** der Zähler vom Master (23) geführt wird und dass ein in einem Anforderungstelegramm (25) übertragener Zählwert im Sicherheitssensor (1) invertiert und an den Master (23) zurückgesendet wird.

8. Sicherheitsanordnung (20) nach einem der Ansprüche 3 bis 7, **dadurch gekennzeichnet, dass** jedes Datentelegramm eine einen Slave kennzeichnende Portnummer aufweist.

9. Sicherheitsanordnung (20) nach Anspruch 8, **dadurch gekennzeichnet, dass** eine Portnummer eines Slaves vom Master (23) vergeben wird.

10. Sicherheitsanordnung (20) nach Anspruch 1, **dadurch gekennzeichnet, dass** ein vom Master (23) gesendetes Anforderungstelegramm (25) in der mehrkanaligen Rechnerstruktur geprüft wird.

11. Sicherheitsanordnung (20) nach Anspruch 10, **dadurch gekennzeichnet, dass** nach Prüfung des Anforderungstelegramms N (25) in der mehrkanaligen Rechnerstruktur ein neues Ausgangstelegramm (26) als Antwort auf das nächste Anforderungstelegramm N+1 (25) generiert und zwischengespeichert wird, und dieses zwischengespeicherte neue Ausgangstelegramm (26) nach Empfang des nächsten Anforderungstelegramms N+1 (25) an den Master (23) gesendet wird.

12. Sicherheitsanordnung (20) nach Anspruch 10, **dadurch gekennzeichnet, dass** in der mehrkanaligen Rechnerstruktur des Sicherheitssensors (1) unabhängig vom Empfang eines Anforderungstelegramms (25) ein Ausgangstelegramm (26) vorbereitet und zwischengespeichert wird, und dass dieses vorbereitete Ausgangstelegramm (26) an den Master (23) gesendet wird, sobald ein Anforderungstelegramm (25) von dem Master (23) empfangen wird.

13. Sicherheitsanordnung (20) nach einem der Ansprüche 8 bis 12, **dadurch gekennzeichnet, dass** in einer Startup Phase vor dem Senden des ersten Anforderungstelegramms (25) die Portnummer, optional zusammen mit anderen Authentifizierungsdaten, an den Sicherheitssensor (1) übertragen wird und von diesem zur Vorbereitung des ersten Antworttelegramms verwendet wird.

14. Sicherheitsanordnung (20) nach Anspruch 13, **dadurch gekennzeichnet, dass** das das Ausgangstelegramm (26) als Antwort auf das erste Anforderungstelegramm (25) einem sicheren Zustand des Sicherheitssensors (1) entsprechende sicherheitsrelevante Daten enthält.

15. Sicherheitsanordnung (20) nach einem der Ansprüche 1 bis 14, **dadurch gekennzeichnet, dass** die mehrkanalige Rechnerstruktur des Sicherheitssensors (1) zweikanalig ausgebildet ist und zwei Rechnereinheiten (27b) aufweist.

16. Sicherheitsanordnung (20) nach Anspruch 15, **dadurch gekennzeichnet, dass** die Rechnereinheiten (27a, 27b) als Rechenkerne (Cores) (29a-c) in einem Gehäuse einer MultiCore-CPU (29) ausgebildet sind.

17. Sicherheitsanordnung (20) nach Anspruch 16, **dadurch gekennzeichnet, dass** in den Rechnereinheiten (27a, 27b) Sensorsignale des Sicherheitssensors (1) zur Generierung eines Objektfeststellungssignals ausgewertet werden.

18. Sicherheitsanordnung (20) nach einem der Ansprüche 15 bis 17, **dadurch gekennzeichnet, dass** nur mit einer ersten Rechnereinheit (27a) Anforderungstelegramme (25) empfangen und Ausgangstelegramme (26) gesendet werden.

19. Sicherheitsanordnung (20) nach einem der Ansprüche 15 bis 18, **dadurch gekennzeichnet, dass** die mehrkanalige Rechnerstruktur zusätzlich zu den beiden Rechnereinheiten (27a, 27b) eine Kommunikations-Rechnereinheit (28) aufweist, wobei nur mit der Kommunikations-Rechnereinheit (28) Anforderungstelegramme (25) empfangen und Ausgangstelegramme (26) gesendet werden.

20. Sicherheitsanordnung (20) nach Anspruch 19, **dadurch gekennzeichnet, dass** sich die Kommunikationsrechnereinheit (28) zusammen mit den Recheneinheiten (27a, 27b) als Rechenkerne (Cores) (29a-c) in einem Gehäuse einer MultiCore-CPU (29) befinden.

21. Sicherheitsanordnung (20) nach Anspruch 22, **dadurch gekennzeichnet, dass** zu sendende Daten der beiden Rechnereinheiten (27a, 27b) auf der Kommunikations-Rechnereinheit (28) gespiegelt sind.

22. Sicherheitsanordnung (20) nach einem der Ansprüche 1 bis 21, **dadurch gekennzeichnet, dass** der Sicherheitssensor (1) ein berührungslos wirkender Sensor ist.

23. Sicherheitsanordnung (20) nach einem der Ansprüche 1 bis 22, **dadurch gekennzeichnet, dass** der Sicherheitssensor (1) ein optischer Sensor ist.

24. Sicherheitsanordnung (20) nach Anspruch 23, **dadurch gekennzeichnet, dass** der Sicherheitssensor (1) ein Lichtvorhang, ein Flächendistanzsensor oder ein Kamerasensor ist.

25. Verfahren zum Betrieb einer Sicherheitsanordnung (20) mit einem Master (23) und einem einen Slave bildenden Sicherheitssensor (1), welche über ein IO-Link Kommunikationsprotokoll Daten austauschen, in dem auf ein Anforderungstelegramm (25) des Masters (23) der Sicherheitssensor (1) ein Ausgangstelegramm (26) an den Master (23) sendet, **dadurch gekennzeichnet, dass** der Sicherheitssensor (1) eine mehrkanalige Rechnerstruktur aufweist, in welcher Ausgangstelegramme (26) generiert werden, wobei auf ein Anforderungstelegramm (25) ein vor dessen Erhalt in der mehrkanaligen Rechnerstruktur generiertes und zwischengespeichertes Ausgangstelegramm (26) an den Master (23) gesendet wird.
